# EUROPÄISCHE PATENTSCHRIFT

(11) **EP 1 535 841 B1**
(45) Veröffentlichungstag und Bekanntmachung des Hinweises auf die Patenterteilung: **20.02.2008**
(21) Anmeldenummer: 04028233.7
(22) Anmeldetag: 29.11.2004
(51) Int. Cl.: B64D 41/00, H01M 8/04

(54) **Anordnung sowie Verfahren zur Erzeugung von Wasser an Bord eines Luftfahrzeuges**
Aircraft on-board water generation device and process
Dispositif et procédé pour la génération d'eau à bord d'un aéronef

(30) Priorität: 27.11.2003 DE 10356012
(43) Veröffentlichungstag der Anmeldung: 01.06.2005
(73) Patentinhaber: Airbus Deutschland GmbH, 21129 Hamburg (DE)
(72) Erfinder: Heinrich, Hans-Jürgen, Dipl.-Phys., 22609 Hamburg (DE); Hoffjann, Claus, Dipl.-Ing., 21629 Neu Wulmstorf (DE); Schuldzig, Hansgeorg, Dipl.-Ing., 21635 Jork (DE)
(74) Vertreter: Klöpper, Ute

(56) Entgegenhaltungen:
- EP-A- 0 957 026
- US-A- 3 867 244
- US-A- 6 131 851

## Beschreibung

Die Erfindung betrifft ein Luftfahrzeug mit installierten Brennstoffzellen zur Erzeugung von Wasser an Bord eines Luftfahrzeuges sowie ein Verfahren hierzu.

Aus der EP 957 026 A2 ist eine Energieversorgungseinheit an Bord eines Luftfahrzeugs zur Substitution eines Haupttriebswerkes, einer Auxiliary Power Unit, einer Ram Air Turbine oder einer NiCd-Batterie bekannt. Eine Brennstoffzelle dient hier zur Erzeugung von Gleichstrom, wobei zur Luftversorgung der Brennstoffzelle Abluft der Luftfahrzeug-Klimaanlage oder Luftfahrzeugaußenluft eingesetzt wird. Aus der Brennstoffzellenabluft wird Wasser für die Wasserversorgung des Luftfahrzeuges gewonnen, wobei die Brennstoffzellenabluft anschließend an die Luftfahrzeugumgebung abgeführt wird, was auch für den aus der Brennstoffzelle austretenden Wasserstoff gilt. Als vorteilhafter Nebeneffekt kann eine Erzeugung von Wasser mittels eines im Abluftstrom angeordneten Wasser-Kondensators erfolgen. Die Anordnung des Brennstoffzellenmoduls ist im Flugzeugheck vorgesehen. Ein Luftmassenaustausch zwischen der Umgebungsluft und dem Inneren des Flugzeuges ist notwendig.

Der Erfindung liegt die Aufgabe zugrunde, ein Luftfahrzeug bzw. ein Verfahren der eingangs genannten Art zu schaffen, bei der mindestens eine Brennstoffzelle zur Wassergenerierung und zur Stromerzeugung vorgesehen ist, die in vorteilhafter Weise in den Passagierkabinenbereich eines Flugzeuges platzsparend integriert ist und wobei ein Luftmassenaustausch zwischen der Umgebungsluft und dem Inneren des Flugzeuges vermieden wird.

Die Aufgabe wird erfindungsgemäß dadurch gelöst, dass bei einem erfindungsgemäßen Luftfahrzeug die Kammer der Kathodenseite an der Innenseite der Rumpfaußenhaut angeordnet ist, wobei der Wärmeübergang zwischen der Außenhaut und der Kammer der Kathodenseite derart ausgelegt ist, dass der in der Abluft der Kathodenseite enthaltene Wasserdampf in der Kammer der Kathodenseite im Betrieb auskondensiert und das dadurch entstehende Kondensat über eine an die Kammer der Kathodenseite angeschlossene Leitung in einen Wassersammeltank abführbar ist.

Es besteht insbesondere der Vorteil, dass mit der vorgeschlagenen Lösung ohne einen Luftmassenaustausch zwischen der Umgebungsluft und dem Inneren des Flugzeugs eine Reduzierung von Lagerkapazität für Trinkwasser und dessen qualitätsgesicherter Bereitstellung ermöglicht wird sowie darüber hinaus mit der Brennstoffzellennutzung als virtuelles Kraftwerk der Energiebedarf von Triebwerksgeneratoren, Hilfsturbine (APU) oder Stauluftturbine (RAT) reduziert oder insgesamt eingespart werden kann. Die Gewinnung von Wasser ist besonders für die Anwendung in Luft- und Raumfahrt von Bedeutung, da hier autonome Systeme zur Bordversorgung benötigt werden um grosse Speichervolumina und Gewichte für das benötigte Trinkwasser zu vermeiden. Im Vordergrund steht dabei ein modulares Konzept aus zahlreichen gleichartigen Komponenten, welche über eine ebenso modular aufgebaute Brennstoff- und Luftversorgung sowie Wasserkondensation und Verteilung, mit hoher Redundanz, die Aspekte der Energie- und Wasserversorgung an Bord von Flugzeugen löst.

Ein erfindungsgemäßes Verfahren ist im Patentanspruch 15 angegeben.

Ausgestaltungen der Erfindung sind in den Unteransprüchen 2 bis 14 sowie 16 bis 21 beschrieben.

In der Zeichnung sind Ausführungsbeispiele der Erfindung dargestellt, die nachstehend anhand der Figuren 1 bis 4 näher beschrieben sind. In den Figuren sind gleiche Bauteile mit gleichen Bezugszeichen versehen.

Es zeigen im einzelnen:
- Fig. 1: einen Teilquerschnitt eines Luftfahrzeuges mit einer schematisch dargestellten erfindungsgemäßen Anordnung eines Brennstoffzellenpaneels,
- Fig. 2: eine schematische Darstellung einer Anordnung von Brennstoffzellen-Paneelen in einer Ansicht von vorn,
- Fig. 3: eine erfindungsgemäße Ausführungsform einer Anordnung zur Wassergewinnung im Bereich der Passagierkabine und
- Fig. 4: eine Schnittdarstellung eines Brennstoffzellenpaneels im in einer Passagierkabine eine Flugzeuges eingebauten Zustand.

Brennstoffzellen können neben der Stromerzeugung auch zur Wassergenerierung verwendet werden. Die nachfolgend beschriebene Anordnung dient zur Reduzierung von Lagerkapazität für Trinkwasser und dessen qualitätsgesicherter Bereitstellung sowie als virtuelles Kraftwerk, welches den Energiebedarf von Triebwerksgeneratoren, Hilfsturbine (APU) oder Stauluftturbine (RAT) reduziert oder insgesamt einspart.

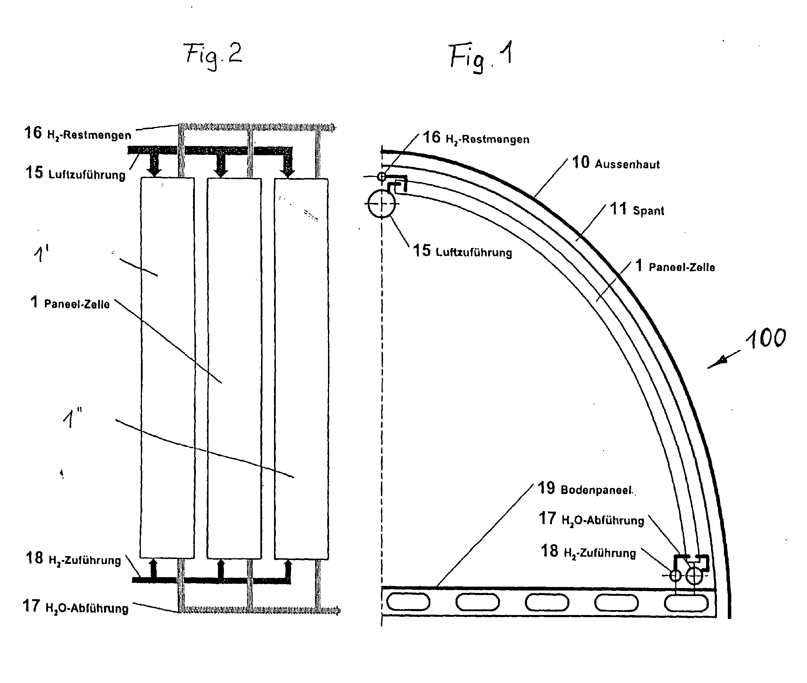

Fig. 1 zeigt einen Teilquerschnitt eines Luftfahrzeuges 100 mit einer schematisch dargestellten erfindungsgemäßen Anordnung eines Brennstoffzellenpaneels 1. Das Paneel 1 ist in Nähe der Rumpfaussenhaut 10 des Luftfahrzeuges 100 vorgesehen.

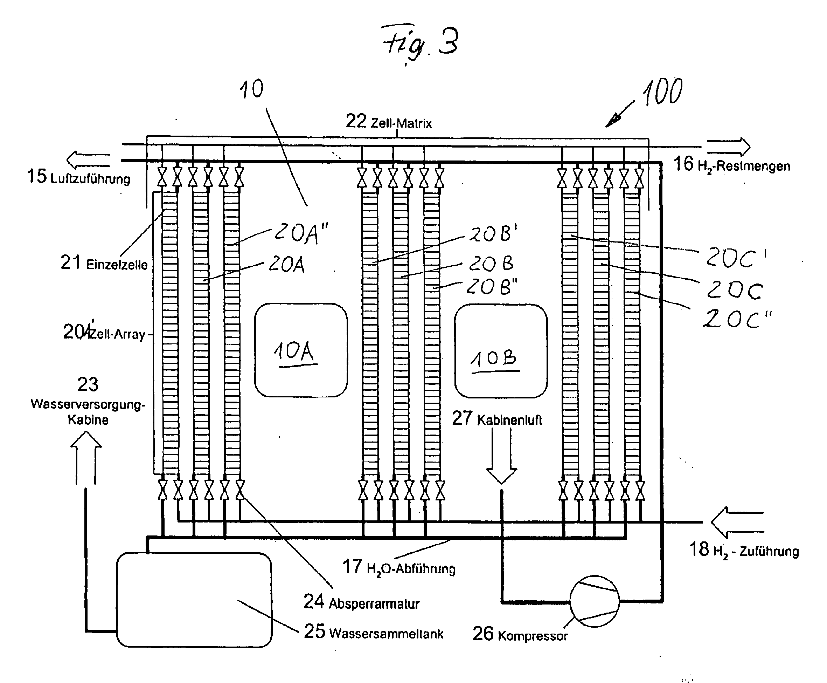

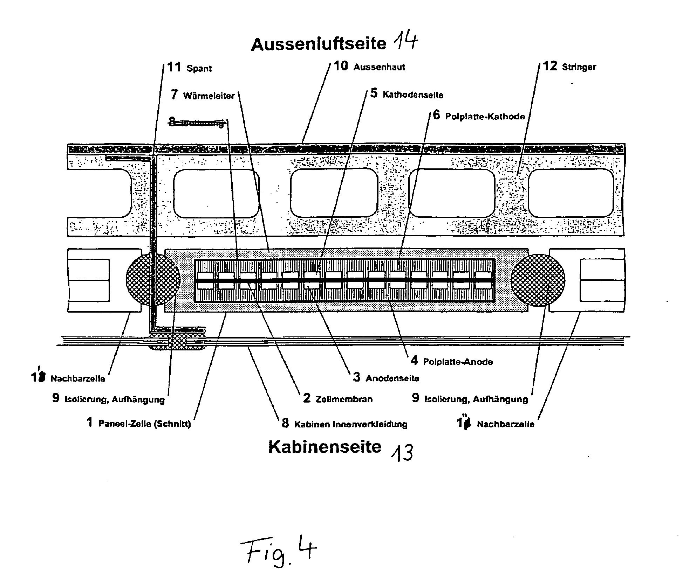

Das Paneel 1 kann direkt an der Kabinenstruktur oder an Flugzeugstrukturteilen, wie am Spant 11 eines Luftfahrzeuges montiert werden (siehe auch Fig. 4, Aufhängung 9). Mehrere dieser Paneele bilden eine Zellmatrix 22 (siehe beispielsweise Ausführungsform in Fig. 3). Das Paneel 1 ist so flexibel bzw. so gewölbt, dass es sich an die Kabineninnenseite bzw. Rumpfhautinnenseite 10 anschmiegt, wobei die Kathodenseite nach aussen zur Rumpfhaut zeigt und die Anodenseite nach innen zum Kabinenraum.

Jedes Paneel bildet ein abgeschlossenes und vollständig gekapseltes System unter Vermeidung einer Abgabe der zu- und abführenden Medien an die Passagierkabine oder außerhalb des Luftfahrzeuges. In Zusammenhang mit Fig. 2 ist ersichtlich, dass über Rohrleitungssysteme, wie eine Brenngaszuführung 18, beispielsweise Wasserstoff/H₂-Zuführung, und eine Luftsauerstoffzuführung 15, die aus Kabinenluft gewonnen wird, die benötigten Medien zugeführt werden und über eine Kondensatabführung 17 und Abluft- sowie Restgasabführung 16 verbrauchte Medien abgeführt werden. Die Luftzuführung 15 sowie die Abluft- und Restgasabführung 16 sind oberhalb des Paneels 1 angeordnet, vorzugsweise im Deckenbereich des Luftfahrzeuges 100. Die Brenngaszuführung (H₂-Zuführung)18 sowie die Abführung 17 des erzeugten Wassers werden über Rohrleitungssysteme von unten an das Paneel 1 herangeführt und sind vorzugsweise nahe des Flugzeugfußbodens 19 im Bereich der Außenhaut 10 vorgesehen.

In Fig. 2 bzw. 3 ist ersichtlich, dass die Brennstoffzellenpaneele 1, 1', 1"zur Optimierung der Gewichtsverteilung in der vorliegenden Ausführungsform gleichmäßig an der Innenseite der Außenhaut 10 verteilt werden.

In Fig. 3 ist dargestellt, dass entlang der Außenhaut 10 des Luftfahrzeuges 100 eine Vielzahl von Brennstoffzellen (Einzelzelle 21 oder mehrzellige Elemente) zu Zellarrays 20A, 20A', 20A'' ... zusammengestellt werden können. Diese Zellarrays 20A, 20A', 20A", 20B, 20B', 20B'', 20C, 20C', 20C'' ... bilden eine Zellmatrix 22, die beispielsweise entlang des gesamten Kabinenbereichs an der Rumpfaußenhaut 10 angeordnet sein kann, wobei hier nur ein Bereich zwischen Ausschnitten 10A und 10B für Kabinenfenster dargestellt ist. Wenn sich die Rumpfzelle des Luftfahrzeuges 100 durch Flugbewegungen elastisch verformt, sind mehrere streifenförmige, unabhängige Systeme, beispielsweise Paneel 1, 1', 1" bzw. Zellarray 20A, 20A', 20A'', vorgesehen. Es können jedoch auch Kombinationen daraus zu einem System geschaltet werden. Zusätzlich erreicht man durch eine Anordnung mehrerer Paneele 1, 1', 1" oder weiterer Zellarrays 20B, 20B', 20B'', 20C, 20C', 20C'' eine hohe Redundanz, d.h. selbst das Versagen einzelner Module beeinträchtigt nicht die Funktion des Gesamtsystems, sondern hat lediglich geringen Einfluss auf die maximal erzielbare Leistung.

Die Verbindungselemente zwischen dem Paneel 1 bzw. Zellarray 20 zu den medienführenden Leitungen können in der Funktion als Absperrarmatur 24 als gasdichte Schnellkupplungen ausgeführt sein und gleichzeitig als mechanisches Tragelement dienen.

In einer weiteren, nicht gezeigten Ausführung können die Kupplungselemente der medienführenden Leitungen, insbesondere aber in der Brenngasleitung 18, Sicherheitsventile enthalten, die bei plötzlichem Druckabfall die Zu- und Ableitungen für das betroffene Paneel 1, 1', 1" bzw. Zellarray 20, 20', 20" sofort schließen.

In Fig. 3 ist weiterhin ersichtlich, dass das von den Zellenpaneels 1, 1', 1 " bzw. Zellarrays 20, 20', 20" über die Wasserleitung 17 abgeführte Kondensat in einem Wassersammeltank 25 aufgenommen und für die Wasserversorgung 23 der Passagierkabine verwendet werden kann. Für die Versorgung der Luftzuführung 15 zu den Brennstoffzellen wird beispielsweise Kabinenluft 27 verwendet und mittels eines Kompressors 26 der Luftzuführung 15 zugeleitet.

In Fig. 4 ist in einer Schnittdarstellung ein Brennstoffzellenpaneel 1 im eingebauten Zustand im Bereich der Außenhaut 10 des Luftfahrzeuges gezeigt. Der Einbau des Paneels 1 erfolgt nahe der Rumpfhaut 10 zwischen Stringer 12 und Kabinen-Innenverkleidung 8, wobei die Breite des Paneels 1 anpassbar ist an die Abstände der Spante 11 des Luftfahrzeuges 100.

Für das Paneel 1 sind einzellige bzw. wenigzellige Brennstoffzellen vorgesehen, deren Kathodenseite 5 eine Kammer bildet, die zur kalten Außenseite 14 des Luftfahrzeuges 100 gerichtet ist, um hier die Kondensation des in der Abluft enthaltenen Wassers zu erreichen und deren Anodenseite 3 von einer Brenngas (z.B. Wasserstoff) führenden Kammer begrenzt wird. Eine Energieabnahme von Gleichstrom erfolgt an der Polplatte-Kathode 6 bzw. an der Polplatte-Anode 4.
Das durch Kondensation gewonnene Wasser bildet Tropfen an der kathodenseitigen, der Rumpfhaut 10 zugewandten kälteren Wand der Kammer 5, wobei die Tropfen der Schwerkraft folgend an ihr nach unten laufen und dort in einem Sammelrohr 17 aufgefangen und in Richtung eines Sammelbehälters 25 transportiert werden. Ein von oben eingeleiteter Luftstrom ist zur kathodenseitigen Zellversorgung mit Sauerstoff vorgesehen und dient zusätzlich dem Wassertransport.

Der Kathodenraum wird durch eine Umhausung begrenzt, deren Außenseite beheizt werden kann. Diese Heizung ist so ausgelegt, dass eine Temperatur wählbar ist, um die äußere Wandung des Kathodenraums 5 gleichzeitig als Kondensationsbereich für den beim Brennstoffzellenprozess anfallenden Wasserdampf zu nutzen. Dieses Wasser sammelt sich am Boden des Kathodenraumes 5 und wird über das Leitungssystem 17 (siehe Fig. 3), welches alle Paneele 1, 1',1 1" miteinander verbindet, mittels eines Druckgefälles zwischen Kathodenraum 5 und angeschlossenem Leitungssystem 17 abgezogen. Die Versorgung mit Luft geschieht über das zweite Rohrleitungssystem 15 (siehe Fig. 3), welches sich oberhalb der Paneele 1, 1', 1" befindet.
Die Beheizung der Kathodenraum-Außenwand erfolgt über ein System von Wärmeträgern bzw. Wärmeleitern 7, welche in der Lage sind, die an der Anodenseite 3 anfallende Wärme auf die gegenüberliegende Kathodenseite 5 zu transportieren. Dies kann durch flüssige, gasförmige oder feste Medien erfolgen, beispielweise durch übliche Wärmeleiter, wie Kupfer. Hierbei wird der Wärmeverlust der innenliegenden, also zur Kabine gerichteten Anodenseite 3 so eingestellt, dass sich ein für den Passagierkomfort optimales Wärmeverhältnis einstellt. Die auf der Anodenseite 3 anfallende Wärme wird somit einerseits zur Beheizung der Kathodenseite verwendet um ein Einfrieren des hier anfallenden Wassers zu vermeiden und gleichzeitig bei Bedarf zur Wärmeabgabe an die Passagierkabine 13.

Der Anodenraum wird gleichfalls durch eine Umhausung begrenzt. Das Brenngas (H₂) wird von unten in den Anodenraum eingelassen. Überschussmengen werden an der Paneel-Oberseite abgezogen und wieder in den H₂-Speicher verbracht.
Aus Sicherheitsgründen ist die kabinenseitige Wand 8 gegen Durchschlag von Gegenständen durch eine interne Verstärkung gesichert.
Die anodenseitige, also Brenngas (H₂) führende Kammer zeigt zur Innen- bzw. Kabinenseite des Luftfahrzeuges.

Durch die Anordnung wird gewährleistet, dass selbst im Verletzungsfall der Außenhaut 10 mit Durchschlag bis in die Kabine nur geringe Mengen Brenngas ausströmen können. Durch die besondere Anordnung und die Druckverhältnisse zwischen Kabine 13 und Außenluftseite 14 wird zusätzlich vermieden, dass das Brenngas in den Kabineninnenraum strömen kann, sondern immer in Richtung des äußeren Durchschlags strömt und so in die freie Atmosphäre entlassen wird. Weiterhin wird für diesen Fall das dem betroffenen Brennstoffzellenpaneel 1, 1', 1" zuströmende Gas über Sicherheitsventile umgehend abgeschaltet, so dass nur sehr geringe Gasmengen entweichen können. Ebenso wird die abführende Wassersammelleitung des betroffenen Paneels 1, 1', 1" verschlossen, so dass die übrigen vorhandenen Paneele weiterhin Wasser generieren und in den Wasserkreislauf schicken können.
Für den Fall des Durchschlags eines Gegenstandes durch die Außenhaut 10 des Flugzeuges und das Paneel 1, 1' bzw. 1" tritt folgender Zustand ein:
Im Flug besteht eine Druckdifferenz von ca. 0,5 bar (Druckdifferenz=0 am Boden) zwischen Aussendruck und Kabinendruck. Das Brenngas liegt im Paneel 1, 1', 1" mit einem Druck von ca. 1,2 bar an, was eine Druckdifferenz von ca. 0,7 bar zur Außenluftseite 14 bedeutet. Daraus folgt, dass im Falle eines Durchschlags die im Paneel vorhandenen Gase durch die Durchschlagsöffnung nach außen, das heißt in Richtung Außenluftseite 14 strömen.
Am Boden, bei ausgeglichenen Druckverhältnissen wird sich dieser Zustand nicht einstellen. Hier unterstützt die gewölbte Formgebung der Paneele 1, 1', 1" und deren Lage im oberen Bereich der Kabine das Ausströmen der Gase an die Außenluftseite 14. Zusätzlich wird jedes Brennstoffzellenpaneel über das Sicherheitsventil bei Druckverlust automatisch von der Brenngaszufuhr abgeriegelt. Hierdurch wird gewährleistet, dass lediglich das zum Durchschlagzeitpunkt im Brennstoffzellenpaneel 1, 1', 1" vorhandene Brenngas ausströmen kann, welches jedoch auf Grund der Mengenverhältnisse ein nicht zündfähiges Gemisch innerhalb der Kabine 13 bildet.
Ein mechanischer Durchschlagschutz an der zur Kabinenseite 13 gerichteten Wandung des Brennstoffzellenpaneels 1, 1', 1'', beispielsweise aus einem CFK-Geflecht, verhindert jedoch weitgehend dass überhaupt dieser Umstand eintritt. Ein solches CFK-Geflecht ist gleichzeitig geeignet, die mechanische Struktur des Paneels 1, 1', 1" und die Befestigungspunkte für die Befestigung an der Flugzeugstruktur zu bilden.

Der Ablauf zur Erzeugung von Wasser wird im nachfolgenden beschrieben:

### Brennstoff- und Luftversorgung

Als Brennstoff ist Wasserstoff H₂ vorgesehen. Dieser kann an Bord in gasförmiger oder flüssiger Form mitgeführt werden oder aus einem Kohlenwasserstoff - im vorliegenden Falle aus Kerosin - reformiert werden.
Bei der Reformierung von Wasserstoff aus Kerosin ist der im Kerosin enthaltene Schwefelanteil zu beachten. Gegebenenfalls wird dem Reformer ein Entschwefelungsverfahren vorgeschaltet. Zusätzlich wird dem Reformer eine CO-Shift-Stufe nachgeschaltet, die bei der Reformierung auftretendes Kohlenmonoxid, welches für die Brennstoffzelle schädlich ist, in für die Brennstoffzelle unschädliches Kohlendioxid umwandelt.
Alternativ zu einem Reformer mit Shift-Stufe und Entschwefelungseinheit kann eine Hochtemperaturbrennstoffzelle die gleiche Funktion übernehmen. Diese wird im vorliegenden Fall so betrieben, dass sie deutlich mehr Wasserstoff aus Kerosin reformiert als sie selbst zur Gewinnung von elektrischer Energie durch eine anliegende elektrische Last benötigt. Dieser Überschuss an Wasserstoff wird mittels eines Molekularsiebes von den anderen Abgasen getrennt, gekühlt und den Paneel-brennstoffzellen zugeführt.
Die zugeführten Gase (Luft und H₂) werden auf die optimale Betriebstemperatur der Brennstofzellen vorgeheizt. Dieses kann durch die beim Reformerprozess auftretende Wärme erreicht werden. Ebenfalls einsetzbar wäre ein elektrischer Vorwärmer.

### Kondensation

Um zu gewährleisten, dass in großen Flughöhen bei Außentemperaturen weit unterhalb des Gefrierpunktes von Wasser (beispielsweise -55°C) das Kathodenkondensat nicht gefriert, enthält die kathodenseitige Kammeraußenwand eine Vorrichtung zur Temperaturregelung, welche eine gleichmäßige Temperaturverteilung möglichst dicht oberhalb des Gefrierpunktes von Wasser an dieser Wand ermöglicht, um so die größtmögliche Menge Kondensat zu gewinnen. Die Temperaturregelung kann beispielsweise durch Kopplung von Temperatursensoren mit einer einstellbaren Wärmeabgabe - beispielsweise durch Pelletier-Elemente - auf der Anodenseite 3 in den Wärmeleiter 7 durchgeführt werden. Gleichzeitig wirkt an dieser Wand bei Bodenbetrieb in wärmerer Umgebung oder bei Sonneneinstrahlung auf die Außenhaut eine Kühlvorrichtung - beispielsweise gespeist durch die Klimaanlage oder durch Pelletier-Elemente-, damit unter allen Einsatzbedingungen Kondensat gewonnen werden kann.

### Wasserabsaugung und Verteilung

Unterhalb der Brennstoffzellenpaneele 1, 1', 1" verläuft die Rohrleitung 17 zum Sammeln des kathodenseitigen Kondensates (H₂O), an welche jedes der Paneele 1, 1', 1" angeschlossen ist. Diese Sammelleitung führt zu einem Wassersammelbehälter 25.
Um den vollständigen Abfluss des Kondensats aus den Brennstoffzellenpaneelen 1, 1', 1" zu gewährleisten, wird in einer Ausführungsform der Sammelbehälter 25 mit Kabinendruck beaufschlagt, während die zuführende Luft zu den Paneelen 1, 1', 1" einen, durch den Kompressor 26 (siehe Fig. 3) erzeugten, leichten Überdruck hat (beispielsweise ca. 0,7 bar Kabinendruck zu ca. 1,2 bar Kompressordruck). Die so bestehende Druckdifferenz zwischen Paneel 1 (bzw. Zellarray 20) und Sammelbehälter 25 sorgt für ein Absaugen des anfallenden Kondensates aus dem Brennstoffzellenpaneel 1 in Richtung Sammelbehälter 25.

Der Kompressor 26 zur Luftversorgung der Brennstoffzellenpaneele 1 saugt die Luft 27 aus der Kabine an, so dass insgesamt das Druckgleichgewicht in der Kabine bestehen bleibt.

### Bezugszeichenliste

- 100 -: Luftfahrzeug

- 1 -: Zellenpaneel
- 2 -: Zellmembran
- 3 -: Anodenseite
- 4 -: Polplatte-Anode(Energieabnahme)
- 5 -: Kathodenseite
- 6 -: Polplatte-Kathode (Energieabnahme)
- 7 -: Wärmeleiter/Umhausung
- 8 -: Kabinen-Innenverkleidung
- 9 -: Aufhängung

- 10 -: Außenhaut
- 10A, 10B -: Ausschnitte für Kabinenfenster
- 11 -: Spant
- 12 -: Stringer
- 13 -: Passagierkabine
- 14 -: Außenluftseite
- 15 -: Luftzuführung
- 16 -: H₂-Restmengenabführung
- 17 -: H₂O-Abführung
- 18 -: H₂-Zuführung
- 19 -: Fußboden

- 20A, 20B, 20C -: Zell-Arrays
- 21 -: Einzelzelle
- 22 -: Zell-Matrix
- 23 -: Wasserversorgung-Kabine
- 24 -: Absperrarmatur
- 25 -: Wassersammeltank
- 26 -: Kompressor

## Patentansprüche

1. Luftfahrzeug mit installierten Brennstoffzellen zur Erzeugung von Wasser an Bord eines Luftfahrzeuges unter Verwendung dieser Brennstoffzellen , wobei als Brennstoffzellen mehrere ein- bzw. wenigzellige Niedrigtemperaturbrennstoffzellen vorgesehen sind, welche ein Brennstoffzellenpaneel (1) oder Zellarray (20A) bilden, wobei die ein- bzw. wenigzellige Brennstoffzellen eine Kathodenseite (5) mit einer Kammer und eine Anodenseite (3)mit einer weiteren Kammer aufweisen, welche durch eine Zellmenbran (2) voneinander getrennt sind, wobei die Kammer der Anodenseite (3) ausgebildet ist, ein Brenngas, insbesondere Wasserstoff, zu führen,
**dadurch gekennzeichnet, dass**
die Kammer der Kathodenseite (5) an der Innenseite der Rumpfaußenhaut (10) angeordnet ist, wobei der Wärmeübergang zwischen der Außenhaut (10) und der Kammer der Kathodenseite (5) derart ausgelegt ist, dass der in der Abluft der Kathodenseite (5) enthaltene Wasserdampf in der Kammer der Kathodenseite (5) im Betrieb auskondensiert und das **dadurch** entstehende Kondensat über eine an die Kammer der Kathodenseite (5) angeschlossene Leitung (17) in einen Wassersammeltank (25) abführbar ist.

2. Luftfahrzeug nach Anspruch 1, **dadurch gekennzeichnet, dass** über Rohrleitungssysteme (15, 16, 17, 18) das Brenngas und ein Luftsauerstoff zugeführt wird und Kondensat und Abluft sowie Restgase abgeführt werden.

3. Luftfahrzeug nach Anspruch 1 oder 2, **dadurch gekennzeichnet, dass** das Paneel (1) oder das Zellarray (20) ein vollständig gekapseltes System unter Vermeidung einer Abgabe der zu- und abführenden Medien an die Passagierkabine oder außerhalb des Luftfahrzeuges darstellt.

4. Luftfahrzeug nach einem der Ansprüche 1 bis 3, **dadurch gekennzeichnet, dass** mehrere Zellarrays (20A, 20A', 20A" ; 20B, 20B' , 20B" ; 20C, 20C" , 20C'') eine Zell-Matrix (22) bilden.

5. Luftfahrzeug nach einem der Ansprüche 1 bis 4, **dadurch gekennzeichnet, dass** die Anordnung des Paneels (1) bzw. des Zellarrays (20) nahe der Rumpfhaut (10) zwischen Stringer (12) und Kabinen-Innenverkleidung (8) erfolgt, wobei die Breite des Paneels (1) bzw. des Zellarrays (20) anpassbar an die Spantabstände des Luftfahrzeuges sind sowie das Paneel (1) bzw. das Zellarray (20) zur Anpassung an die gekrümmte Rumpfhaut angepasst gekrümmt ist.

6. Luftfahrzeug nach einem der Ansprüche 1 bis 5, **dadurch gekennzeichnet, dass** das Paneel (1) bzw. das Zellarray (20) streifenförmig ausgebildet ist und jedes der nebeneinander angeordneten Streifen unabhängig voneinander an- und abschaltbar ausgebildet ist.

7. Luftfahrzeug nach einem der Ansprüche 1 bis 6, **dadurch gekennzeichnet, dass** die Verbindungselemente (24) zu den medienführenden Leitungen (15, 16, 17, 18) als gasdichte Schnellkupplungen ausgeführt sind.

8. Luftfahrzeug nach einem der Ansprüche 1 bis 7, **dadurch gekennzeichnet, dass** in den Kupplungselementen (24) der medienführenden Leitungen (15, 16, 17, 18), insbesondere in der Brenngasleitung (18), Sicherheitsventile enthalten sind, die bei plötzlichem Druckabfall die Zu- und Ableitungen für das betroffene Paneel (1) schließen.

9. Luftfahrzeug nach Anspruch 4, **dadurch gekennzeichnet, dass** in der Flugzeug-Gesamtmatrix (22) die Brennstoffzellenpaneele (1, 1', 1") bzw. die Zellarrays (20A, 20A' , 20A" ; 20B, 20B' , 20B" ; 20C, 20C", 20C") elektrisch teilweise parallel und teilweise in Reihe verschaltet sind, so dass ein für den Betrieb in Luftfahrzeugen optimales Verhältnis zwischen Stromstärke und Spannung einstellbar ist.

10. Luftfahrzeug nach einem der Ansprüche 1 bis 9, **dadurch gekennzeichnet, dass** das Luftfahrzeug ferner eine Temperaturregelungseinheit aufweist, so dass die Temperatur an der Kathodenseite (5) regelbar ist zur Verhinderung des Einfrierens des kondensierten Wassers bei Betrieb der Zelle (1).

11. Luftfahrzeug nach Anspruch 10, **dadurch gekennzeichnet, dass** die Temperaturregelungseinheit eingerichtet ist, einen Temperaturausgleich zwischen Kathoden- und Anodenseite (5, 3) zu regeln, so dass das in der Kathodenabluft enthaltene Wasser größtmöglichst auskondensierbar ist.

12. Luftfahrzeug nach einem der Ansprüche 1 bis 11, **dadurch gekennzeichnet, dass** zwischen Außenhaut (10)und Brennstoffzellenpaneel (1, 1', 1'') direkter thermischer Kontakt besteht.

13. Luftfahrzeug nach einem der Ansprüche 1 bis 11, **dadurch gekennzeichnet, dass** zwischen Außenhaut (10)und Brennstoffzellenpaneel (1, 1', 1") eine thermische Isolierung vorgesehen ist.

14. Luftfahrzeug nach einem der Ansprüche 1 bis 13, **dadurch gekennzeichnet, dass** mehrere Brennstoffzellenpaneele (1, 1', 1'')an der Innenseite der Außenhaut 10 angeordnet sind, so dass eine optimale Gewichtsverteilung an der Außenhaut (10) des Luftfahrzeuges (100) berücksichtigbar ist

15. Verfahren zur Erzeugung von Wasser an Bord eines Luftfahrzeuges unter Verwendung von einer oder mehreren Brennstoffzellen, wobei mehrere ein- bzw. wenigzellige Brennstoffzellen ein Brennstoffzellenpaneel (1) oder Zellarray (20) bilden und wobei die ein- bzw. wenigzellige Brennstoffzelle eine Kathodenseite (5) mit einer Kammer und eine Anodenseite (3) mit einer weiteren Kammer, welche durch eine Zellmembran (2) voneinander getrennt sind, **dadurch gekennzeichnet dass**
die Kammer der Kathodenseite (5) an der Innenseite der kalten Rumpfaußenhaut (10) angeordnet ist, wodurch der in der Abluft der Kathodenseite (5) durch Wärmeaustausch mit der Außenhaut (10) kondensiert und
dass das anfallende Wasser aus den Brennstoffzellenprozessen gesammelt und der Nutzung in Wasserverbrauchern zugeführt wird.

16. Verfahren nach Anspruch 15, **dadurch gekennzeichnet, dass** der Anodenseite (3) der Brennstoffzelle (1) ein Brenngas, beispielweise Wasserstoff, zugeführt wird und die beim Brennstoffzellenprozess an der Anodenseite (3) entstehende Abwärme zumindest teilweise für eine Wärmezuführung bei einem Temperaturregelprozess zwischen der Kammer der Kathodenseite (5) und der kalten Außenseite (14) zur Kondensatbildung verwendet wird, und zum anderen Teil zur wärmeabgabe in die Flugzeugkabine vorgesehen ist.

17. Verfahren nach Anspruch 15, **dadurch gekennzeichnet, dass** eine aktive Beheizung der Kathodenseite bei gleichzeitiger Kühlung der Anodenseite mittels Heiz- und Kühlelementen vorgesehen ist.

18. Verfahren nach einem der Ansprüche 15 bis 17, **dadurch gekennzeichnet, dass** ein Druckgefälle zwischen Luftzuführung und Kondensatableitung besteht, wodurch der Kondensattransport aus der Brennstoffzelle (1) in Richtung eines Sammelbehälters (25) gewährleistet wird.

19. Verfahren nach einem der Ansprüche 15 bis 18, **dadurch gekennzeichnet, dass** zum Betrieb der Paneel-Brennstoffzellen (1) Wasserstoff genutzt wird, welcher in einem Reformerprozess aus einem Kohlenwasserstoff gewonnen wird und welcher aus diesem Prozess Anteile von Kohlendioxid (CO₂) enthält aber kein Kohlenmonoxid (CO).

20. Verfahren nach einem der Ansprüche 15 bis 19, **dadurch gekennzeichnet, dass** der Reformerprozess in einer Hochtemperatur-Brennstoffzelle stattfindet, welche in ihren Betriebsparametern so eingestellt ist, dass sie ausreichend freie H2-Moleküle aus einem Kohlenwasserstoff und zugeführtem Wasser gewinnt und nach außen abgibt sowie freiwerdende Kohlenmonoxidanteile in Kohlendioxid umsetzt.

21. Verfahren nach einem der Ansprüche 15 bis 20, **dadurch gekennzeichnet, dass** eine flexible Anpassung an einen momentanen Stromverbrauch durch ein elektrisches Verschalten der Brennstoffzellen (1, 1' , 1") erreicht wird.

## Claims

1. Aircraft with installed fuel cells for the generation of water on board an aircraft using these fuel cells, wherein a plurality of single-cell or few-cell low-temperature fuel cells are provided as fuel cells,which form a fuel cell panel (1) or cell array (20A), wherein the single-cell or few-cell fuel cells comprise a cathode side (5) with a chamber and an anode side (3) with a further chamber, which are separated from each other by a cell membrane (2), wherein the chamber on the anode side (3) is designed to carry a combustion gas, in particular hydrogen, **characterised in that** the chamber on the cathode side (5) is arranged on the inner side of the fuselage outer skin (10), wherein the heat transfer between the outer skin (10) and the chamber on the cathode side (5) is designed so that the water vapour contained in the outlet air on the cathode side (5) is condensed in the chamber on the cathode side (5) during operation and the condensate formed thereby can be discharged via a pipe (17) attached to the chamber on the cathode side (5) into a water collection tank (25).

2. Aircraft according to claim 1, **characterised in that** piping systems (15, 16, 1.7, 18) supply the combustion gas and atmospheric oxygen and condensate and discharge outlet air and residual gases.

3. Aircraft according to claim 1 or 2, **characterised in that** the panel (1) or the cell array (20) is a fully encapsulated system which prevents the media being supplied and discharged from being released into the passenger cabin or outside the aircraft.

4. Aircraft according to any one of claims 1 to 3, **characterised in that** a plurality of cell arrays (20A, 20A', 20A'; 20B, 20B' 20B"; 20C, 20C', 20C") form a cell matrix (22).

5. Aircraft according to any one of claims 1 to 4, **characterised in that** the arrangement of the panel (1) or of the cell arrays (20) is close to the fuselage skin (10) between a stringer (I2) and an interior cabin lining (8), wherein the width of the panel (I) or the cell arrays (20) is adapted to the frame spacing of the aircraft (100) and the panel (1) or the cell array (20) is suitably curved for adaptation to, the curved fuselage skin.

6. Aircraft according to any one of claims 1 to 5, **characterised in that** the panel (1) or the cell array (20) is strip-shaped and each of the strips arranged one beside the other can be switched on and off independently of one another.

7. Aircraft according to any one of claims 1 to 6, **characterised in that** the connecting elements (24) to the media-carrying lines (15, 16, 17, 18) are gas-tight rapid-action couplings.

8. Aircraft according to any one of claims 1 to 7, **characterised in that** the coupling elements (24) of the media-carrying lines (15, 16, 17, 18), in particular in the combustion gas line (18), contain, safety valves, which, in the event of a sudden drop in pressure, close the supply and discharge lines for the panel (1) in question.

9. Aircraft according to claim 4, **characterised in that**, in the aircraft overall matrix (22), the fuel cell panels (1,1', 1") or the cell arrays (20A, 20A', 20A"; 20B, 20B', 20B"; 20C, 20C', 20C") are connected electrically partially in parallel and partially in series, so that a ratio between current intensity and voltage which is optimum for operation in aircraft can be established.

10. Aircraft according to any one of claims 1 to 9, **characterised in that** the aircraft also has a temperature control unit so that the temperature on the cathode side (5) can be controlled to prevent freezing of the condensed water during the operation of the cell (1).

11. Aircraft according to claim 10, **characterised in that** the temperature control unit is configured to control temperature equalisation between the cathode side and the anode side (5, 3) so that the water contained in the cathode outlet air is condensed to the greatest degree possible.

12. Aircraft according to any one of claims 1 to 11, **characterised in that** there is direct thermal contact between the outer skin (10) and the fuel-cell panel (1, 1', 1").

13. Aircraft according to any one of claims 1 to 11, **characterised in that** thermal insulation is provided between the outer skin (10) and the fuel-cell panel (1, 1', 1").

14. Aircraft according to any one of claims 1 to 13, **characterised in that** a plurality of fuel cell panels (1,1', 1") are arranged on che inner side of the outer skin 10 so that an optimum weight distribution can be taken into account on the outer skin (10) of the aircraft (100).

15. Method for the generation of water on board an aircraft using one or more fuel cells, wherein a plurality of single-cell or few-cell fuel cells form a fuel cell panel (1) or cell array (20) and wherein the single-cell or few-cell fuel cells comprise a cathode side (5) with a chamber and an anode side (3) with a further chamber, which are separated from each other by a cell membrane (2), **characterised in that** the chamber on the cathode side (5) is arranged on the inner side of the cold fuselage outer skin (10), whereby the water vapour in the outlet air on the cathode side (5) is condensed by heat exchange with the outer skin (10) and the water produced from the fuel cell processes is collected and supplied for use in water consumers.

16. Method according to claim 15, **characterised in that** a combustion gas, for example hydrogen, is supplied to the anode side (3) of the fuel cell (1) and the waste heat that occurs during the fuel cell process on the anode side (3) is used at least partly for a heat supply in a temperature control process between the chamber on the cathode side (5) and the cold outer side (14) for the purpose of condensate formation and, on the other hand, is provided to release heat into the aircraft cabin.

17. Method according to claim 15, **characterised in that** active heating of the cathode side with simultaneous cooling of the anode side is provided by means of heating and cooling elements.

18. Method according to any one of claims 15 to 17, **characterised in that** there is a pressure gradient between the air supply and the condensate discharge, whereby it is guaranteed that the condensate is transported out of the fuel cell (1) in the direction of a collection container (25).

19. Method according to any one of claims 15 to 18; **characterised in that** hydrogen is used for the operation of the panel fuel cells (1), said hydrogen being obtained in a reformer process from a hydrocarbon and wherein the hydrogen contains fractions of carbon dioxide (CO₂) from this process but no carbon monoxide (CO).

20. Method according to any one of claims 15 to 19, **characterised in that** the reformer process takes place in a high-temperature fuel cell the operating parameters of which are adjusted so that it produces free H₂ molecules from a hydrocarbon and supplied water and discharges them outside and converts released carbon monoxide fractions into carbon dioxide.

21. Method according to any one of claims 15 to 20, **characterised in that** a flexible adaptation to an instantaneous current consumption is performed by an electrical connection of the fuel cells (1, 1', 1").

## Revendications

1. Aéronef équipé de piles combustible destinées produire de l'eau à bord d'un aéronef à l'aide desdites piles à combustible, les piles à combustible mises en oeuvre étant constituées de plusieurs piles à combustible fonctionnant à basse température et comportant chacune une cellule élémentaire unique ou un faible nombre de cellules élémentaires, lesdites piles combustible formant un panneau de piles à combustible (1) ou une barrette de cellules (20A); les piles à combustible dont chacune comporte soit une cellule élémentaire unique ou un faible nombre de cellules élémentaires étant pourvues d'un côté cathode (5) avec une chambre et d'un côté anode (3) avec une autre chambre, lesdites chambres étant séparées par une membrane (2), la chambre du côté anode (3) étant réalisée tel qu'elle peut contenir un combustible gazeux, notamment de l'hydrogène, **caractérisé en ce que**
la chambre du côté cathode (5) est disposée sur la face intérieure de la coque extérieure (10) du fuselage, la transition thermique entre la coque extérieure (10) et la chambre du côté cathode (5) étant conçue telle que la vapeur d'eau contenue dans l'effluent gazeux du côté cathode (5) se condense, au cours du fonctionnement, dans la chambre du côté cathode (5) et que le condensat ainsi recueilli peut être évacué, à travers un conduit (17) relié à la chambre du côté cathode (5), dans un réservoir d'eau (25).

2. Aéronef selon la revendication 1, **caractérisé en ce que** des systèmes de conduits (15, 16, 17, 18) servent à acheminer le combustible gazeux et de l'oxygène atmosphérique ainsi qu'à évacuer l'effluent gazeux et des gaz résiduels.

3. Aéronef selon les revendications ou 2, **caractérisé en ce que** le panneau (1) ou la barrette de cellules (20) constituent un système parfaitement hermétique évitant ainsi que les milieux à acheminer et évacuer ne s'échappent dans la cabine des passagers ou l'extérieur de l'aéronef.

4. Aéronef selon l'une quelconque des revendications 1 à 3, **caractérisé en ce que** plusieurs barrettes de cellules (20A, 20A', 20A"; 20B, 20B', 20B"; 20C, 20C", 20C") forment une matrice de cellules (22).

5. Aéronef selon l'une quelconque des revendications 1 à 4, **caractérisé en ce que** le panneau (1) ou, respectivement, la barrette de cellules (20) est disposé(c) à proximité de la coque du fuselage (10) entre un raidisseur (12) et un revêtement intérieur de la cabine (8), la largeur du panneau (1) ou, respectivement, de la barrette de cellules (20) étant adaptable à l'écartement des cadres de l'aéronef (100) et le panneau (1) ou, respectivement, la barrette de cellules (20) étant courbé(e) de manière à épouser la courbure de la coque du fuselage.

6. Aéronef selon l'une quelconque des revendications 1 à, 5, **caractérisé en ce que** le panneau (1) ou, ' respectivement, la barrette de cellules (20) est réalisé(e) en forme de bande et que chacune de ces bandes juxtaposées peut être activée ou désactivée de façon indépendante

7. Aéronef selon l'une quelconque des revendications 1 à 6, **caractérisé en ce que** les raccords (24) aux conduits (15, 16, 17, 18) dans lesquels circulent les milieux, sont réalisés sous forme de raccords rapides qui sont étanches aux gaz.

8. Aéronef selon l'une quelconque des revendications 1 à 7, **caractérisé en ce que** les raccords (24) des conduits (15, 16, 17, 18) dans lesquels circulent les milieux, notamment le conduit du combustible gazeux (18), comportent des vannes de sécurité qui, dans le cas d'une brusque dépressurisation, coupent les conduits d'alimentation et d'évacuation du panneau (1) concerné,

9. Aéronef selon la revendication 4, **caractérisé en ce que**, dans l'ensemble de la matrice de l'avion (22), les panneaux de piles à combustible (1, 1', 1") ou, respectivement, les barrettes de cellules (20A, 20A', 20A"; 2013, 2013', 20B"; 20C, 20C'; 20C") sont, d'un point de vue électrique, monté(c)s partiellement en parallèle et partiellement en série, de manière à pouvoir ajuster le rapport entre la tension et l'intensité du courant à sa valeur optimale pour le fonctionnement dans des aéronefs.

10. Aéronef selon l'une quelconque des revendications 1 à 9, **caractérisé en ce que** l'aéronef comporte, en outre, une unité de réglage de la température permettant de régler la température sur le côté cathode (5) afin de pouvoir empêcher l'eau condensée de geler lors du fonctionnement de la pile (1).

11. Aéronef selon la revendication 10, **caractérisé en ce que** l'unité de réglage de la température est conçue telle qu'elle règle l'échange de température entre le côté cathode (5) et le côté anode (3) de manière à ce la plus grande proportion possible de l'eau contenue dans l'effluent cathodique puisse être récupérée par condensation.

12. Aéronef selon l'une quelconque des revendications 1 à 11, **caractérisé en ce que** la coque extérieure (10) et le panneau de piles à combustible (1, 1', 1") sont en contact thermique direct.

13. Aéronef selon l'une des revendications 1 à 11, **caractérisé en** cc qu'une isolation thermique est prévue entre la coque extérieure (10) et le panneau de piles combustible (1, 1', 1").

14. Aéronef selon l'une quelconque des revendications 1 à 13, **caractérisé en ce que** plusieurs panneaux de piles à combustible (1, 1', 1") sont disposés sur la face intérieure de la coque extérieure (10), permettant de réaliser une répartition optimale du poids sur la coque extérieure (10) de l'aéronef (100).

15. Procédé destiné à produire de l'eau à bord d'un aéronef à l'aide d'une ou de plusieurs piles à combustible, plusieurs piles à combustible, constituées chacune d'une cellule élémentaire unique ou d'un faible nombre de cellules élémentaires, formant un panneau de piles à combustible (1) ou une barrette de cellules (20), ladite pile à combustible, qui comporte une cellule élémentaire unique ou un faible nombre de cellules élémentaires, étant pourvue d'un côté cathode (5) avec une chambre et d'un côté anode (3) avec une autre chambre, lesdites chambres étant séparées par une membrane (2), **caractérisé en ce que**
la chambre du côté cathode (5) est disposée sur la face intérieure de la coque extérieure froide du fuselage (10), provoquant ainsi la condensation dans effluent gazeux du côté cathode (5) par échange de chaleur avec la coque extérieure (10), et
l'eau produite dans les processus des piles à combustible est recueillie et utilisée pour l'alimentation de dispositifs qui consomment de l'eau.

16. Procédé selon la revendication 15, **caractérisé en ce que** le côté anode (3) de la pile à combustible (1) est alimenté en combustible gazeux, par exemple en hydrogène, et que la chaleur qui, lors du processus de la pile à combustible, est dissipée sur le côté anode (3) est au moins partiellement utilisée comme source de chaleur dans un processus de réglage de la température entre la chambre du côté cathode (5) et la face extérieure froide (14) pour produire du condensat, la partie restante de la chaleur étant dissipée dans la cabine de l'avion.

17. Procédé selon la revendication 15. **caractérisé en ce qu'**un chauffage actif du côté cathode est prévu alors que le côté anode est refroidi, ces processus étant réalisés au moyen d'éléments chauffants et refroidissants.

18. Procédé selon l'une quelconque des revendications 15 à 17, **caractérisé en ce qu'**un gradient de pression existe entre l'alimentation en air et l'évacuation du condensat, garantissant ainsi le transport du condensat de la pile à combustible (1) vers un réservoir (25).

19. Procédé selon l'une quelconque des revendications 15 à 18, **caractérisé en ce que** de l'hydrogène est utilisé pour faire fonctionner les piles à combustible du panneau (1), ledit hydrogène étant produit dans un processus de reformage à partir d'un hydrocarbure et contenant une proportion de gaz carbonique (CO2) issu dudit processus mais pas de monoxyde de carbone (CO).

20. Procédé selon l'une quelconque des revendications 15 à 19, **caractérisé en ce que** le processus de reformage est réalisé dans une pile à combustible à haute température dont les paramètres de fonctionnement sont ajustés de manière à ce qu'elle libère, à partir d'un hydrocarbure auquel on ajoute de l'eau, une quantité suffisante de H₂ moléculaire et qu'elle transforme le monoxyde de carbone qu'elle libère en gaz carbonique.

21. Procédé selon l'une quelconque des revendications 15 à 20, **caractérisé en ce qu'**une adaptation flexible à une consommation électrique momentanée est réalisée en établissant des connexions électriques entre les piles à combustibles (1,1', 1").
